# EUROPEAN PATENT APPLICATION

(11) **EP 4 693 055 A1**
(43) Date of publication of application: **11.02.2026**
(21) Application number: 25192034.4
(22) Date of filing: 28.07.2025
(51) Int. Cl.: G06F 13/28, G06F 13/30

(54) **SYSTEM AND METHOD FOR REGULATING DIRECT MEMORY ACCESS COMMANDS**

(30) Priority: 08.08.2024 IN 202441059864
(71) Applicant: NXP B.V., 5656 AG Eindhoven (NL)
(72) Inventor: Tiwari, Nikhil, 5656AG Eindhoven (NL); Singh, Prabhjot, 5656AG Eindhoven (NL); Tuschen, Christian, 5656AG Eindhoven (NL); Agrawal, Rajkumar, 5656AG Eindhoven (NL); BRETT, Maik, 5656AG Eindhoven (NL); Khandelwal, Rachit, 5656AG Eindhoven (NL); Bhardwaj, Shivam, 5656AG Eindhoven (NL)
(74) Representative: Colaiuda, Antonella

(57) **Abstract**

A direct memory access (DMA) controller is coupled to command sequencers. The command sequencers launch multiple DMA commands with a unique identifier (ID) assigned to each of the DMA commands. The DMA controller offloads the DMA commands from the command sequencers and stores the DMA commands such that stalling of the command sequencers is avoided during execution of the DMA commands. Further, the DMA controller queues the DMA commands and provides the DMA commands to a DMA engine for execution and stores a command status and a result status for each DMA command. Based on the command status indicating that the DMA commands are executed, the command sequencers synchronize a launch of upcoming DMA commands.

## Description

### FIELD OF USE

The present disclosure relates generally to electronic circuits, and, more particularly, to a system and method for regulating direct memory access commands.

### BACKGROUND

Modem detection and ranging systems comprise multiple command sequencers and a dedicated direct memory access (DMA) engine. The command sequencers generate commands based on execution of instructions associated with transfer of data. The commands are utilized by the DMA engine to thus handle the transfer of data between a system memory (e.g., static random access memory) and various peripherals such as a signal processor, analog to digital converter (ADC), or the like, of the ranging system. The generated commands further enable the DMA engine to offload the memory operation from central processing unit cores thereby managing the data transfer independently. However, inefficient utilization of the DMA engine impacts data transfer rates and overall system throughput.

### BRIEF DESCRIPTION OF THE DRAWINGS

The following detailed description of the embodiments of the present disclosure will be better understood when read in conjunction with the appended drawings. The present disclosure is illustrated by way of example, and not limited by the accompanying figures, in which like references indicate similar elements.
FIG. 1 illustrates a schematic block diagram of a system on chip (SoC) in accordance with an embodiment of the present disclosure;
FIG. 2 illustrates a schematic block diagram of a direct memory access (DMA) controller of the SoC of FIG. 1, in accordance with an embodiment of the present disclosure;
FIGS. 3A-3C represent first through third timing diagrams that illustrate launch of various commands by one or more command sequencers of a set of command sequencers of the SoC of FIG. 1, in accordance with an embodiment of the present disclosure;
FIGS. 4A-4C, collectively, represent a flowchart that illustrates a method for regulating DMA commands by the DMA controller of the SoC of FIG. 1, in accordance with an embodiment of the present disclosure; and
FIGS. 5A-5D, collectively, represent a flowchart that illustrates a weighted round robin algorithm to select DMA commands by a first in first out arbiter of the DMA controller of FIG. 2, in accordance with an embodiment of the present disclosure.

### DETAILED DESCRIPTION

The detailed description of the appended drawings is intended as a description of the embodiments of the present disclosure and is not intended to represent the only form in which the present disclosure may be practiced. It is to be understood that the same or equivalent functions may be accomplished by different embodiments that are intended to be encompassed within the scope of the present disclosure.

### Overview:

In conventional detection and ranging systems, command sequencers launch a sequence of commands such as peripheral control commands, reset commands, or the like. Additionally, the command sequencers launch direct memory access (

DMA) commands to transfer data between memory and peripheral components of the system. A DMA processor executes the launched DMA commands. The command sequencers launch the DMA commands as and when instructions pertaining to the launch of the DMA commands are received. In an event that the instructions are sparse, the DMA processor is idle frequently. Further, when the instructions are frequently received by the command sequencers, the command sequencers stall the launch of a new DMA command until an ongoing DMA command is executed by the DMA processor. In other words, the command sequencers wait for an ongoing DMA command to be executed before launching a new DMA command. A degradation of signal processing throughput thus occurs in conventional detection and ranging systems.

Various embodiments of the present disclosure disclose a processing circuit which includes a set of command sequencers, a direct memory access (DMA) controller, and a DMA engine. The set of command sequencers launch a first set of DMA commands. Each DMA command of the first set of DMA commands is associated with a command identifier (ID) that is uniquely assigned to each of the first set of DMA commands. The processing circuit further includes a command arbiter such that the command arbiter receives the first set of DMA commands from the set of command sequencers, and provides the first set of DMA commands to the DMA controller. The DMA controller receives the first set of DMA commands. Further, the DMA controller queues the first set of DMA commands. Upon queuing the first set of DMA commands, the DMA engine executes the first set of DMA commands.

The DMA controller further stores a command status and a result status for each DMA command of the first set of DMA commands. The command status and the result status are associated with the command ID of the first set of DMA commands. The set of command sequencers synchronize launch of a second set of DMA commands based on the command status. The sequence of steps for execution of the second set of DMA commands is similar to that of the first set of DMA commands. Additionally, the set of command sequencers synchronize launch of control commands based on the command status.

As the DMA controller of the present disclosure stores the command status and the result status for each DMA command of the first set of DMA commands, the set of command sequencers synchronizes the launch of the second set of DMA commands and the control commands based on execution of one or more DMA commands of the first set of DMA commands. Further, the DMA controller of the present disclosure offloads the first set of DMA commands from the set of command sequencers. Thus, stalling of the set of command sequencers is avoided during the execution of the first set of DMA commands when a frequency associated with the first set of DMA commands is high. Thus, a processing throughput of the set of command sequencers is improved over conventional techniques. Additionally, the DMA controller queues the first set of DMA commands such that when the frequency associated with upcoming DMA commands may be low, the DMA engine executes the first set of DMA commands that are queued ensuring efficient bandwidth utilization of the DMA engine. The present disclosure also enables the coupling of the processing circuit to a core by way of a hardware interface that allows access to internal data structures of the DMA controller to debug the processing circuit.

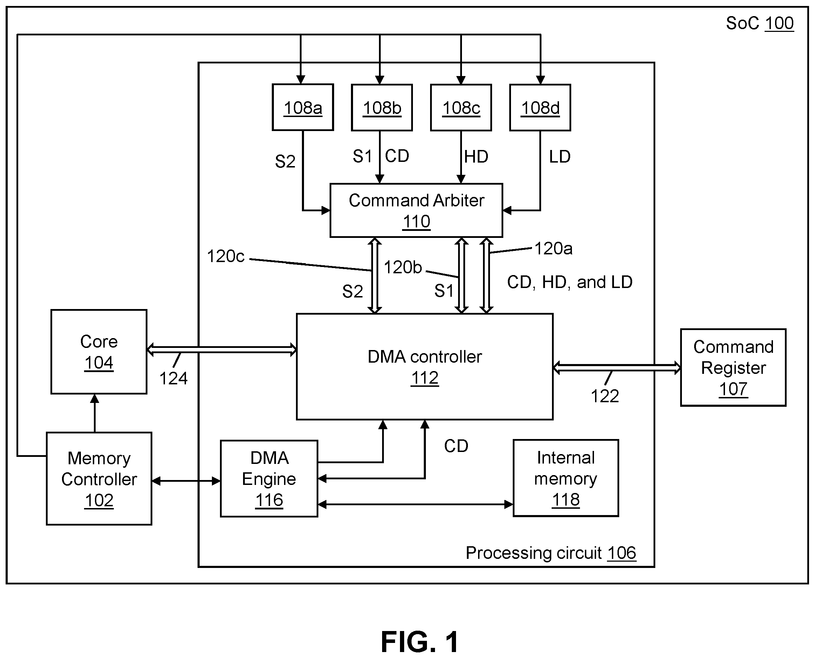

FIG. 1 illustrates a schematic block diagram of a system-on-chip (SoC) 100, in accordance with an embodiment of the present disclosure. The SoC 100 may be within a detection and ranging system. Further, the SoC 100 may be coupled to a system memory, an input/output interface, a communication module, a set of sensors, peripheral interfaces, or the like.

The set of sensors may be configured to generate raw sensor data based on detection of various parameters in an environment. The raw sensor data may correspond to amplitude (*e.g.,* strength of a signal), phase (*e.g.,* relative position of the signal within a wave cycle), time-of-flight information, or the like. For example, in a ranging sensor, the time-of-flight information may correspond to a time difference between emission and reception of a signal that may be measured in nanoseconds to determine distance or range. The set of sensors may be further configured to provide the raw sensor data to the system memory.

The system memory may be configured to store the raw sensor data. Examples of the system memory may include a dynamic random access memory (DRAM), a static random access memory (SRAM), or the like. The system memory may be further configured to store instructions to process the raw sensor data such as performing Fast Fourier Transform (FFT) for spectral analysis, beamforming to enhance spatial resolution, doppler processing for velocity estimation of detected targets, or the like. Based on the processed raw sensor data, the detection and ranging system may control various operations. Examples of the operations may include target detection and tracking, environmental mapping, security and surveillance, weather monitoring, or the like.

The SoC 100 may correspond to an integrated circuit (IC) that comprises a plurality of functional units on a single piece of silicon. Examples of the plurality of functional units may include central processing unit (CPU) cores, memory controllers, graphics processing unit (GPU), or the like. The SoC 100 may include a memory controller 102, a core 104, a processing circuit 106, and a command register 107.

### Memory controller 102:

The memory controller 102 may be coupled to the system memory. The memory controller 102 may include suitable logic, circuitry, and/or interfaces that may be configured to perform one or more operations. For example, the memory controller 102 may be configured to communicate with the system memory to transfer the instructions from the system memory to each of the core 104 and the processing circuit 106. The memory controller 102 may be further configured to coordinate read and write operations for efficient data transfer (*e.g.,* calibration data, control parameters, signal processing result, or the like) and optimal utilization of memory bandwidth, thereby facilitating high-speed data access that may be necessary for real-time applications. Examples of the real-time applications may include RADAR and LiDAR systems in autonomous vehicles, advanced driver assistance systems (ADAS), aerospace and defense, or the like.

### Core 104:

The core 104 may be coupled to the memory controller 102. The core 104 may include suitable logic, circuitry, and/or interfaces that may be configured to perform one or more operations. For example, the core 104 may be configured to receive the first set of instructions from the memory controller 102. Upon receiving the first set of instructions, the core 104 may be configured to execute the first set of instructions to perform arithmetic calculations, logic operations, data manipulation, control tasks, or the like. The first set of instructions may correspond to complex data processing, task management, data analysis, and interpretation, or the like. Examples of the core 104 may correspond to advanced RISC machine (ARM) cortex-A series, ARM cortex-M series, RISC-V cores, x86 cores, or the like.

### Processing circuit 106:

The processing circuit 106 may be coupled to the memory controller 102 and the core 104. The processing circuit 106 may be configured to receive a second set of instructions from the memory controller 102. Upon receiving the second of instructions, the processing circuit 106 may be configured to execute the second set of instructions to perform simpler tasks such as logic operations, data transfer operations, control signaling, or the like. The second set of instructions may correspond to routine data handling, basic task scheduling, elementary data formatting, or the like.

The processing circuit 106 may be configured to generate a plurality of direct memory access (DMA) commands and a plurality of control commands based on the second set of instructions retrieved from the system memory. The processing circuit 106 may be further configured to regulate the plurality of DMA commands and the plurality of control commands as explained in the ongoing disclosure. The plurality of DMA commands may facilitate direct transfer of data between the system memory and the processing circuit 106 without intervention from the core 104. Further, the plurality of control commands may facilitate operational sequencing and coordination of various components of the SoC 100. Examples of the various components of the SoC 100 may include a control unit, a power management unit, an analog to digital converter (ADC), a digital to analog converter (DAC), or the like.

The processing circuit 106 may be further configured to assign a command identifier (ID) to each DMA command of the plurality of DMA commands. The command ID may be uniquely assigned to each DMA command of the plurality of DMA commands. Additionally, the processing circuit 106 may be further configured to assign a group ID to each subset of DMA commands of the plurality of DMA commands such that each subset of DMA commands may be associated with a corresponding predefined operation. For example, a group ID A01 may be assigned to a subset of DMA commands that may handle transfer of image data (a predefined operation) from the system memory to the SoC 100.

Although it is mentioned that the processing circuit 106 may generate the plurality of DMA commands based on the second set of instructions, in various embodiments, the processing circuit 106 may retrieve the plurality of DMA commands from the system memory. The retrieved plurality of DMA commands may include the command ID and the group ID that may be software programmable.

The processing circuit 106 may be further configured to store a command status and a result status for each DMA command of the first set of DMA commands. The command status and the result status stored may be associated with the command ID and the group ID. Based on completion of execution of a DMA command of the plurality of DMA commands, the processing circuit 106 may be further configured to synchronize execution of upcoming DMA commands of the plurality of DMA commands. In above example, the group ID A01 may be assigned to the subset of DMA commands (*e.g.,* threads) that may handle transfer of image data. Further, a command status may be associated with the group ID A01 such that based on the command status, the processing circuit 106 may determine whether the transfer of image data may be complete.

The processing circuit 106 may include a set of command sequencers 108a-108d, a command arbiter 110, a DMA controller 112, a DMA engine 116, and an intemal memory 118.

### Set of command sequencers 108a-108d:

The set of command sequencers 108a-108d may include a first command sequencer 108a, a second command sequencer 108b, a third command sequencer 108c, and a fourth command sequencer 108d. The set of command sequencers 108a-108d may be configured to receive the second set of instructions from the memory controller 102. The set of command sequencers 108a-108d may be further configured to decode the second set of instructions. Based on decoding of the second set of instructions, the set of command sequencers 108a-108d may be further configured to generate a first set of DMA commands of the plurality of DMA commands, a critical priority DMA command, and the plurality of control commands. Further, the set of command sequencers 108a-108d may be configured to launch the first set of DMA commands and the plurality of control commands. In an embodiment, the set of command sequencers 108a-108d may correspond to a multi-threaded system that may generate the first set of DMA commands based on the second set of instructions such that the first set of DMA commands may correspond to a single task.

Though the processing circuit 106 is shown to include the set of command sequencers 108a-108d, the command arbiter 110, the DMA controller 112, the DMA engine 116, and the internal memory 118, in numerous embodiments, the processing circuit 106 may include additional components such as an FFT controller, arithmetic logic units (ALUs), a clock generator, an interrupt controller, or the like. The additional components may be configured to execute the plurality of control commands.

The set of command sequencers 108a-108d may be further configured to assign the unique command ID to each DMA command of the first set of DMA commands. Each DMA command of the first set of DMA commands may include a source address, a destination address, and a priority value. Further, each DMA command may be executed based on the priority value. Additionally, context information may be associated with each of the first set of DMA commands and may be utilized for the execution of the first set of DMA commands. Examples of the context information may correspond to data transfer size of the first set of DMA commands, data transfer type of the first set of DMA commands, error handling data for the first set of DMA commands, or the like. The set of command sequencers 108a-108d may be further configured to assign the group ID to each subset of DMA commands of the first set of DMA commands.

In an embodiment, the second command sequencer 108b of the set of command sequencers 108a-108d may be configured to launch a critical priority DMA command CD (as shown in FIG. 1). A priority value associated with the critical priority DMA command CD may be greater than the priority value of each of the first set of DMA commands. In other words, the critical priority DMA command CD may have a highest priority. Thus, the critical priority DMA command CD may be executed prior to executing the first set of DMA commands. In a scenario, the critical priority DMA command CD may be essential to execute processing steps that may be prerequisite to execute the first set of DMA commands. For example, the critical priority DMA command CD may indicate fetching a compression vector table for an upcoming compression command (such as the first set of DMA commands) or fetching twiddle data to execute an FFT operation prior to executing the first set of DMA commands, or the like.

The priority value associated with each of the first set of DMA commands may correspond to one of a high priority value and a low priority value such that the first set of DMA commands may include a set of high priority DMA commands and a set of low priority DMA commands, respectively. The set of high priority DMA commands may be executed before the set of low priority DMA commands. For example, the set of high priority DMA commands may correspond to fetching input data from the system memory that may be required by the additional components (*e.g.,* the FFT controller) for a range processing operation that may be utilized for upcoming second set of instructions. Further, the set of low priority DMA commands may correspond to a write operation for data processed by the additional components to the system memory.

Although it is mentioned that the priority value may correspond to one of a high priority value and a low priority value, in various embodiments, the priority value may further correspond to an intermediate priority value in addition to the high priority value and the low priority value. The intermediate priority value may be a range of priority levels that may be lower than the high priority value, and higher than the low priority value. For example, when the high priority value may be represented by 1 and the low priority value may be represented by 10, the intermediate priority value may be represented by a range between 2-9.

In an embodiment, the third command sequencer 108c may be further configured to launch at least one command of the set of high priority DMA commands (e.g., a high priority DMA command, denoted by "HD" in FIG. 1) of the first set of DMA commands. Additionally, the fourth command sequencer 108d may be further configured to launch at least one command of the set of low priority DMA commands (e.g., a low priority DMA command, denoted by "LD" in FIG. 1) of the first set of DMA commands. As the priority value associated with the high priority DMA command HD may exceed the priority value associated with the low priority DMA command LD, the high priority DMA command HD may be executed prior to the low priority DMA command LD. The set of command sequencers 108a-108d may be further configured to provide the critical priority DMA command CD, the high priority DMA command HD, and the low priority DMA command LD to the command arbiter 110.

The set of command sequencers 108a-108d may be further configured to generate a status command S1 and a synchronization command S2. Additionally, the set of command sequencers 108a-108d may be further configured to provide the status command S1 and the synchronization command S2 to the command arbiter 110.

### Status command S1:

The set of command sequencers 108a-108d may generate the status command S1 to receive a command status and a result status of the first set of DMA commands. The status command S1 may include one of the command ID and the group ID that may be associated with the corresponding DMA command or the corresponding subset of DMA commands, respectively. The command status of a DMA command may indicate one of that (i) the DMA command may be queued for execution (hereinafter referred to as "queued"), (ii) the DMA command may be currently being executed (hereinafter referred to as "executing"), (iii) the DMA command may have been executed (hereinafter referred to as "executed"), or (iv) the command ID of the DMA command may be free (hereinafter referred to as "free"). Further, when the DMA command may have been executed, a command ID associated with the DMA command may be marked as free thereby indicating that the command ID may be available for assignment to a new DMA command. For example, the second command sequencer 108b may generate the status command S1 to determine whether a command ID 'CMD1' corresponding to a DMA command may be free and may be assigned to a new DMA command. In further embodiments, the command status may be used to determine an average time interval between queuing and execution of one of the first set of DMA commands.

The result status associated with the first set of DMA commands may correspond to an outcome of execution of each DMA command of the first set of DMA commands. For example, the high priority DMA command HD may indicate processing ten data blocks for FFT. When the high priority DMA command HD may be executed, the third command sequencer 108c may determine the outcome of the execution of the high priority DMA command HD. The outcome may indicate that five data blocks out of ten data blocks may be successfully processed. To successfully process the remaining data blocks, the result status of the executed high priority DMA command HD may be further utilized to generate at least one of a second set of DMA commands of the plurality of DMA commands, by the set of command sequencers 108a-108d. Thus, at least one of the second set of DMA commands may be generated to process the remaining five blocks.

### Synchronization command S2:

The set of command sequencers 108a-108d may generate the synchronization command S2 to receive the command status. The set of command sequencers 108a-108d may be further configured to synchronize a launch of the second set of DMA commands. In further embodiments, the set of command sequencers 108a-108d may be configured to synchronize the launch of at least one of the plurality of control commands based on the command status. For example, the first command sequencer 108a may generate the synchronization command S2 to synchronize the launch of a control command of the plurality of control commands based on execution of a DMA command of the first set of DMA commands that may be launched by the second command sequencer 108b. In such a scenario, the control command and the DMA command may be related to a single task such that the launch of the control command may be halted to complete data transfer based on the DMA command. Further, upon completion of the data transfer (execution of the DMA command), the control command may be launched.

The synchronization command S2 may include one of (i) the command ID associated with one of the first set of DMA commands and (ii) the group ID associated with the subset of DMA commands.

### Command arbiter 110:

The command arbiter 110 may be coupled to the set of command sequencers 108a-108d. The DMA controller 112 may be coupled to the set of command sequencers 108a-108d by way of the command arbiter 110. The command arbiter 110 may include suitable circuitry that may be configured to perform one or more operations. For example, the command arbiter 110 may be configured to receive the first set of DMA commands (e.g., the high priority DMA command HD and the low priority DMA command LD) from the set of command sequencers 108a-108d. The command arbiter 110 may be further configured to provide the first set of DMA commands (e.g., the high priority DMA command HD and the low priority DMA command LD) to the DMA controller 112.

The command arbiter 110 may be further configured to receive the critical priority DMA command CD from the second command sequencer 108b. The command arbiter 110 may prioritize the critical priority DMA command CD over the first set of DMA commands and provide the critical priority DMA command CD to the DMA controller 112 prior to providing the first set of DMA commands.

Upon receiving the DMA commands (*e.g.,* the critical priority DMA command CD, the high priority DMA command HD, and the low priority DMA command LD), the command arbiter 110 may initiate one of a first level prioritization and a second level prioritization.

### First level prioritization:

The command arbiter 110 may be further configured to provide the critical priority DMA command CD to the DMA controller 112 by means of a first interface 120a.

### Second level prioritization:

Upon providing the critical priority DMA command CD, the command arbiter 110 may be further configured to provide the first set of DMA commands (*e.g.,* the high priority DMA command HD and the low priority DMA command LD), to the DMA controller 112 by means of the first interface 120a.

### First interface 120a, a second interface 120b, and a third interface 120c:

The DMA controller 112 may be coupled to the command arbiter 110 by way of the first interface 120a, the second interface 120b, and the third interface 120c. Each of the first interface 120a, the second interface 120b, and the third interface 120c may correspond to a hardware interface, such as high-speed serial connections, parallel buses, dedicated interconnects, or the like.

The first interface 120a may be configured to facilitate transfer of the first set of DMA commands and the critical priority DMA command CD from the command arbiter 110 to the DMA controller 112. In an embodiment, the first interface 120a may utilize high-bandwidth communication protocols to support rapid transfer of commands (*e.g.,* the first set of DMA commands and the critical priority DMA command CD).

The second interface 120b may be configured to facilitate transfer of the status command S1 from the command arbiter 110 to the DMA controller 112. Additionally, the third interface 120c may be configured to facilitate transfer of the synchronization command S2 from the command arbiter 110 to the DMA controller 112. Three separate interfaces (*e.g.,* the first interface 120a, the second interface 120b, and the third interface 120c) may enable parallel command transfer between the command arbiter 110 and the DMA controller 112, thereby improving overall throughput of the processing circuit 106.

The command arbiter 110 may be further configured to receive the status command S1 and the synchronization command S2 from the set of command sequencers 108a-108d. Upon receiving the status command S1, the command arbiter 110 may be further configured to request at least one of the command status and the result status of the DMA command associated with the command ID included in the status command S1 from the DMA controller 112.

### DMA controller 112:

The DMA controller 112 may be configured to receive the first set of DMA commands and the critical priority DMA command CD from the command arbiter 110 via the first interface 120a. Thus, the DMA controller 112 may be coupled to the set of command sequencers 108a-108d by way of the command arbiter 110. Upon receiving the first set of DMA commands, the DMA controller 112 may be further configured to detect the priority value associated with each DMA command of the first set of DMA commands. Further, based on the priority value associated with each of the first set of DMA commands, the DMA controller 112 may be configured to store the first set of DMA commands. Thus, the DMA controller 112 may offload the first set of DMA commands from the set of command sequencers 108a-108d such that the set of command sequencers 108a-108d may launch the plurality of control commands. The DMA controller 112 may be further configured to receive the status command S1 and the synchronization command S2 from the command arbiter 110 via the second interface 120b and the third interface 120c, respectively.

Upon receiving the first set of DMA commands, the DMA controller 112 may be further configured to read the context information associated with each of the first set of DMA commands. The DMA controller 112 may be further configured to store the context information.

The DMA controller 112 may be further configured to store the command status for the first set of DMA commands based on at least one of reception of the first set of DMA commands, execution of the first set of DMA commands, or the like. The DMA controller 112 may be further configured to provide at least one of the stored command status and the result status of one or more DMA commands of the first set of DMA commands to the command arbiter 110 via the second interface 120b, upon receiving the status command S1. In an embodiment, the one or more DMA commands may be associated with one of the command ID and the group ID included in the status command S1. Further, the command arbiter 110 may be configured to provide at least one of the command status and the result status of one or more DMA commands of the first set of DMA commands to the set of command sequencers 108a-108d.

Upon receiving the synchronization command S2 associated with a command ID of a corresponding DMA command, the DMA controller 112 may be further configured to determine whether the DMA command may have been executed. The DMA controller 112 may be further configured to hold the synchronization command S2 when the command status of one or more DMA commands of the first set of DMA commands may be queued or executing. Alternatively, upon determining that the DMA command may have been executed, the DMA controller 112 may be further configured to provide the corresponding command status to the command arbiter 110 by means of the third interface 120c. Upon receiving the command status, the command arbiter 110 may be further configured to provide the command status to the set of command sequencers 108a-108d. Further, based on the command status, the command sequencers 108a-108d may synchronize the launch of an upcoming command (*e.g.* the second set of DMA commands).

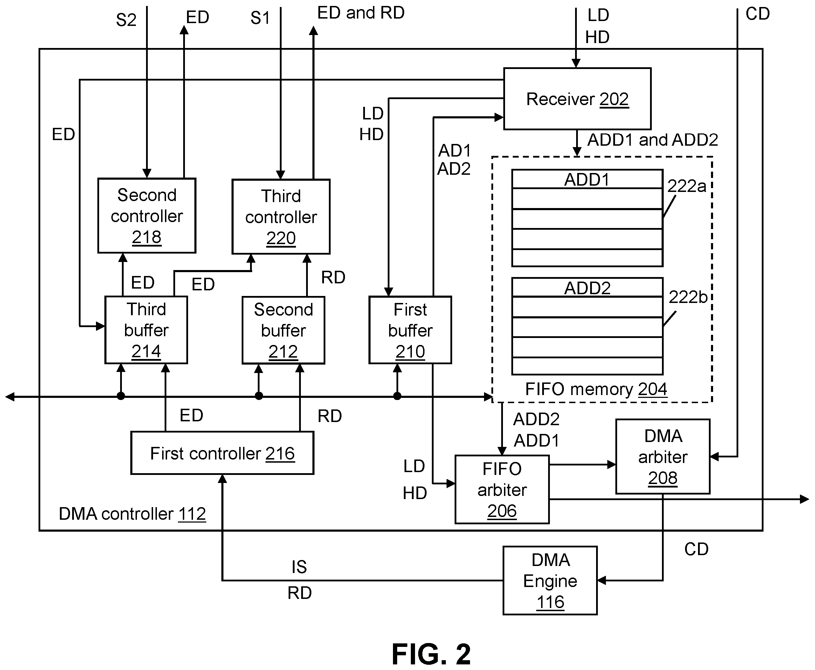

The DMA controller 112 may be configured to request the weights associated with the set of high priority DMA commands and the set of low priority DMA commands from the command register 107. The DMA controller 112 may request the weights to queue the first set of DMA commands (*e.g.,* the set of high priority DMA commands and the set of low priority DMA commands) from the command register 107. Further, the DMA controller 112 may be configured to provide the queued first set of DMA commands to the DMA engine 116. The various operations of the DMA controller 112 are explained in detail in FIG. 2.

### Fourth interface 122:

The command register 107 may be coupled to the DMA controller 112 by way of a fourth interface 122. The fourth interface 122 may correspond to a hardware interface, such as high-speed serial connections, parallel buses, dedicated interconnects, or the like.

### Command register 107:

The command register 107 may include suitable circuitry that may be configured to perform one or more operations. For example, the command register 107 may be configured to store weights associated with the set of high priority DMA commands and the set of low priority DMA commands and provide the weights to the DMA controller 112. In an embodiment, the command register 107 may receive the weights from an external component (e.g., the system memory). In additional embodiments, the command register 107 may receive the weights from the core 104. The weights associated with the set of high priority DMA commands and the set of low priority DMA commands may be software programmable and assigned prior to the DMA controller 112 receiving at least one of the first set of DMA commands. Further, the weights associated with the set of high priority DMA commands and the set of low priority DMA commands may be kept unchanged when the DMA controller 112 may receive the first set of DMA commands from the command arbiter 110.

### Fifth interface 124:

The DMA controller 112 may be further coupled to the core 104 by way of a fifth interface 124. The fifth interface 124 may correspond to a hardware interface, such as high-speed serial connections, parallel buses, dedicated interconnects, or the like. Further, the fifth interface 124 may provide a hardware path for debugging the DMA controller 112 by the core 104. The core 104 may be configured to debug the DMA controller 112 by identifying, analyzing, and resolving issues or defects within the DMA controller 112 by means of the fifth interface 124.

### DMA engine 116:

The DMA engine 116 may be coupled to the DMA controller 112. The DMA engine 116 may include suitable circuitry that may be configured to perform one or more operations. For example, the DMA engine 116 may be configured to receive the DMA commands (*e.g.,* the first set of DMA commands and the critical priority DMA command CD) from the DMA controller 112. Upon receiving the DMA commands, the DMA engine 116 may be further configured to execute the DMA commands sequentially based on the queuing. In an embodiment, during execution, the DMA engine 116 may perform several operations. For example, the DMA engine 116 may be further configured to decode the received DMA commands to extract source address, destination address, transfer size, or the like. Further, the DMA engine 116 may be configured to initiate data transfer between the internal memory 118 and the system memory. Upon completing the data transfer, the DMA engine 116 may be further configured to provide the command status and the result status to the DMA controller 112. The DMA controller 112 may be further configured to update the command status and store the result status.

### Internal memory 118:

The internal memory 118 may be coupled to the DMA engine 116. The internal memory 118 may include suitable circuitry configured to perform one or more operations. For example, the internal memory 118 may be configured to store intermediate data related to the operations of the set of command sequencers 108a-108d. Examples of the intermediate data may correspond to configuration parameters, temporary computation results, frequently accessed data, or the like.

The internal memory 118 may be further coupled to various components to store data associated with the additional components of the processing circuit 106 (*e.g.,* the FFT controller, the arithmetic logic units (ALUs), the clock generator, the interrupt controller, or the like). For example, in the detection and ranging system, the internal memory 118 may store FFT coefficients loaded by the DMA engine 116 from the system memory and may perform real-time signal processing. Examples of the internal memory 118 may include SRAM, cache memory, or the like.

FIG. 2 illustrates a schematic block diagram of the DMA controller 112, in accordance with an embodiment of the present disclosure.

The DMA controller 112 may include a receiver 202, a first in first out (FIFO) memory 204, a FIFO arbiter 206, and a DMA arbiter 208. The DMA controller 112 may further include a first buffer 210, a second buffer 212, a third buffer 214, a first controller 216, a second controller 218, and a third controller 220.

### Receiver 202:

The receiver 202 may be coupled to the command arbiter 110. The receiver 202 may include suitable circuitry that may be configured to perform one or more operations. For example, the receiver 202 may be configured to receive at least one of the critical priority DMA command CD and the first set of DMA commands from the set of command sequencers 108a-108d by way of the command arbiter 110 and the first interface 120a. The first set of DMA commands may include the set of high priority DMA commands and the set of low priority DMA commands.

The receiver 202 may receive the first set of DMA commands sequentially. Upon receiving the first set of DMA commands, the receiver 202 may be further configured to detect the priority value associated with each DMA command of the first set of DMA commands. Additionally, the receiver 202 may be further configured to read the context information associated with each DMA command of the first set of DMA commands. Further, based on the priority value, the receiver 202 may be further configured to provide the first set of DMA commands and the context information associated with the first set of DMA commands to the first buffer 210. The receiver 202 may be further configured to provide the command status (hereinafter referred to as 'a command status ED') to the third buffer 214 such that the command status ED may be queued. For the sake of simplicity, the receiver 202 in FIG. 2 is shown to receive the high priority DMA command HD and the low priority DMA command LD sequentially from the command arbiter 110 by way of the first interface 120a.

### First buffer 210:

The first buffer 210 may be coupled to the receiver 202. The first buffer 210 may include suitable circuitry that may be configured to perform one or more operations. For example, the first buffer 210 may be configured to receive the first set of DMA commands and the context information from the receiver 202. The first buffer 210 may be further configured to store the first set of DMA commands and the context information. Upon storing the first set of DMA commands, the first buffer 210 may be further configured to provide a memory address associated with each DMA command of the first set of DMA commands to the receiver 202. The memory address may correspond to a location within the first buffer 210 that may temporarily store a corresponding DMA command of the first set of DMA commands. The receiver 202 may be further configured to receive the memory addresses (*e.g.,* the memory address associated with each DMA command of the first set of DMA commands) from the first buffer 210. Additionally, the receiver 202 may be further configured to provide the memory addresses to the FIFO memory 204. In an embodiment, the first buffer 210 may be a command buffer that may store the first set of DMA commands and the context information associated with the corresponding command ID and the group ID.

In a scenario, the first buffer 210 may receive the high priority DMA command HD and the low priority DMA command LD from the receiver 202. Further, the first buffer 210 may store the high priority DMA command HD at a first address ADD1. Additionally, the first buffer 210 may store the low priority DMA command LD at a second address ADD2. The first buffer 210 may provide the first address ADD1 and the second address ADD2 to the receiver 202. Further, the receiver 202 may provide the first address ADD1 and the second address ADD2 to the FIFO memory 204.

### FIFO memory 204:

The FIFO memory 204 may be coupled to the receiver 202. The FIFO memory 204 may be configured to receive the memory addresses from the receiver 202. Further, the FIFO memory 204 may be configured to store the memory addresses based on the priority value of the associated DMA commands. The FIFO memory 204 may include a plurality of FIFO queues. For the sake of simplicity, the plurality of FIFO queues are shown to include a high priority FIFO queue 222a and a low priority FIFO queue 222b, although in actual implementation, the plurality of FIFO queues may include two or more FIFO queues. The high priority FIFO queue 222a may be configured to store an address associated with the set of high priority DMA commands. Additionally, the low priority FIFO queue 222b may be configured to store an address associated with the set of low priority DMA commands. Each of the high priority FIFO queue 222a and the low priority FIFO queue 222b may include a write pointer to manage the storage of addresses. When an address may be stored, a write pointer may indicate a current position in the respective FIFO queue where the address may be stored. After writing, the write pointer may increment to the next available location, to store an upcoming address.

In the aforementioned scenario, the FIFO memory 204 may store the first address ADD1 and the second address ADD2 based on the priority value. The first address ADD1 may be stored in the high priority FIFO queue 222a and the second address ADD2 may be stored in the low priority FIFO queue 222b.

### FIFO arbiter 206:

The FIFO arbiter 206 may be coupled to the FIFO memory 204, the first buffer 210, and the command register 107. The FIFO arbiter 206 may include suitable circuitry that may be configured to perform one or more operations. For example, the FIFO arbiter 206 may be configured to request the weights associated with the set of high priority DMA commands and the set of low priority DMA commands from the command register 107. The FIFO arbiter 206 may be further configured to receive the weights from the command register 107.

The FIFO arbiter 206 may include a high priority weight counter and a low priority weight counter. Based on the weights, the FIFO arbiter 206 may be further configured to load the high priority weight counter and the low priority weight counter. In other words, the FIFO arbiter 206 may update the high priority weight counter and the low priority weight counter based on the weights. The FIFO arbiter 206 may be further configured to select the address associated with each of the first set of DMA commands based on a weighted round robin algorithm that may consider numerical weights of each of the high priority weight counter and the low priority weight counter. Based on the selection of address, weights associated with the high priority weight counter and the low priority weight counter may be adjusted. For example, when an address corresponding to a DMA command of the set of high priority DMA commands may be selected, the high priority weight counter may be decremented.

Although it is mentioned that the FIFO arbiter 206 may select the address associated with each of the first set of DMA commands based on the weighted round robin algorithm, in various embodiments, the FIFO arbiter 206 may select the address associated with each of the first set of DMA commands based on at least one of an earliest deadline first (EDF) algorithm, a shortest job next (SJN) algorithm, a least slack time (LST) algorithm, or the like.

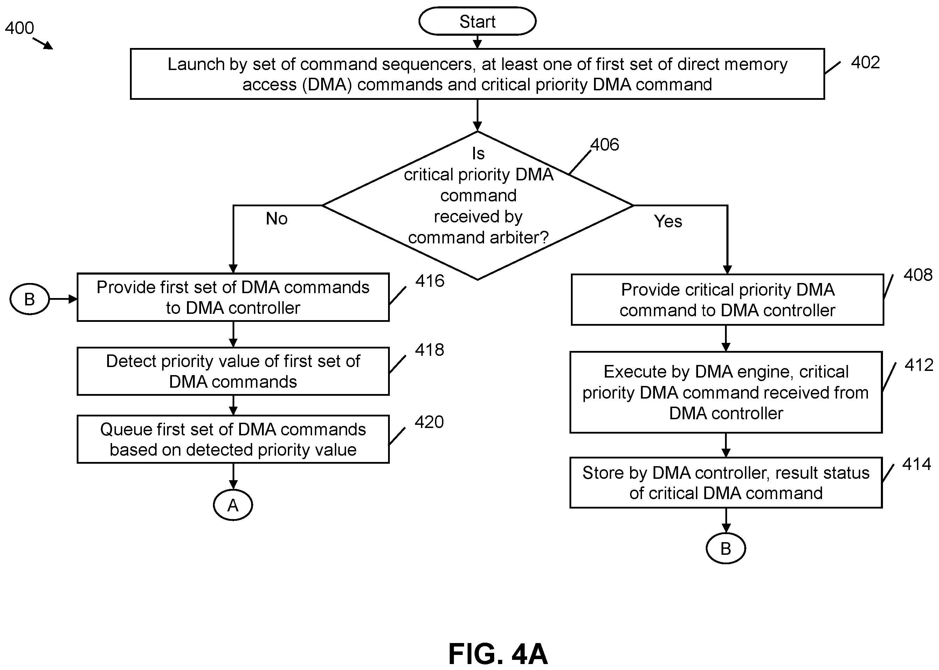

Additionally, the FIFO arbiter 206 may include a high priority flag and a low priority flag. The high priority flag being set may indicate that the high priority FIFO queue 222a may be empty and the high priority weight counter may include weights. In other words, the weights associated with the high priority weight counter may be unexhausted. Similarly, the low priority flag being set may indicate that the low priority FIFO queue 222b may be empty and the low priority weight counter may include weights. In other words, the weights associated with the low priority weight counter may be unexhausted. The various operations of the FIFO arbiter 206 are shown and explained in detail in FIGS. 4A-4D. In an embodiment, the selection of the address associated with each of the first set of DMA commands may be sequential.

The FIFO arbiter 206 may be further configured to retrieve each of the first set of DMA commands (e.g., the high priority DMA command HD and the low priority DMA command LD) from the first buffer 210 based on the address associated with each of the first set of DMA commands. In an embodiment, the retrieval of each of the first set of DMA commands may be sequential for a sequential execution of the first set of DMA commands. Based on the retrieval of the first set of DMA commands, the FIFO memory 204 may be further configured to pop the address associated with the first set of DMA commands. In an example, when the first address ADD1 corresponding to the high priority DMA command HD may be retrieved by the FIFO arbiter 206, the FIFO memory 204 may pop the first address ADD1 from the high priority FIFO queue 222a such that the first address ADD1 may be erased from the high priority FIFO queue 222a. Additionally, when the second address ADD2 corresponding to the low priority DMA command LD may be retrieved by the FIFO arbiter 206, the FIFO memory 204 may pop the second address ADD2 from the low priority FIFO queue 222b such that the second address ADD2 may be erased from the low priority FIFO queue 222b.

The FIFO arbiter 206 may be further configured to provide each of the first set of DMA commands to the DMA arbiter 208. In an embodiment, the FIFO arbiter 206 may be further configured to retrieve the context information associated with the first set of DMA commands from the first buffer 210. Further, the FIFO arbiter 206 may be configured to provide the context information of the first set of DMA commands to the DMA arbiter 208.

### DMA arbiter 208:

The DMA arbiter 208 may be coupled to the command arbiter 110. The DMA arbiter 208 may include suitable circuitry that may be configured to perform one or more operations. For example, the DMA arbiter 208 may be configured to receive the critical priority DMA command CD from the command arbiter 110. Further, the DMA arbiter 208 may be configured to provide the critical priority DMA command CD to the DMA engine 116 for execution.

The DMA arbiter 208 may be further coupled to the FIFO arbiter 206 and the DMA engine 116. The DMA arbiter 208 may be configured to receive the first set of DMA commands and the context information associated with the first set of DMA commands from the FIFO arbiter 206 sequentially. Upon receiving each of the first set of DMA commands, the DMA arbiter 208 may be further configured to determine whether the critical priority DMA command CD received from the command arbiter 110 may be executed by the DMA engine 116. Upon determining that the critical priority DMA command CD may be currently being executed, the DMA arbiter 208 may be further configured to queue the first set of DMA commands. In other words, the DMA arbiter 208 may perform arbitration between the critical priority DMA command CD and the first set of DMA commands. Upon determining that the critical priority DMA command CD has been executed, the DMA arbiter 208 may be further configured to provide the first set of DMA commands sequentially to the DMA engine 116. Additionally, the DMA arbiter 208 may provide the context information associated with the first set of DMA commands to the DMA engine 116. Further, the DMA engine 116 may execute each of the first set of DMA commands and provide the result status (hereinafter referred to as 'a result status RD') associated with each of the first set of DMA commands to the first controller 216. During the execution of each of the first set of DMA commands, the DMA engine 116 may be further configured to provide an interrupt signal IS to the first controller 216 to receive the command status ED of each of the first set of DMA commands.

### First controller 216:

The first controller 216 may be coupled to the receiver 202 and the DMA engine 116. The first controller 216 may include suitable circuitry that may be configured to perform one or more operations. For example, the first controller 216 may be configured to receive the interrupt signal IS from the DMA engine 116 during the execution of each of the first set of DMA commands. Based on the interrupt signal IS, the first controller 216 may be configured to determine the command status ED of each of the first set of DMA commands. Further, the first controller 216 may be configured to update the command status ED such that the command status ED may be executing. Additionally, the first controller 216 may be further configured to provide the updated command status ED of the first set of DMA commands to the third buffer 214.

The first controller 216 may be further configured to receive the result status RD for the first set of DMA commands from the DMA engine 116. The first controller 216 may be further configured to provide the result status RD to the second buffer 212. Based on the result status RD, the first controller 216 may be further configured to update the command status ED such that the command status ED may correspond to executed. Additionally, the first controller 216 may be further configured to provide the updated command status ED of the first set of DMA commands to the third buffer 214.

### Second buffer 212:

The second buffer 212 may be coupled to the first controller 216. The second buffer 212 may include suitable circuitry that may be configured to perform one or more operations. For example, the second buffer 212 may be configured to receive the result status RD of the first set of DMA commands from the first controller 216. The second buffer 212 may be further configured to store the result status RD. In an embodiment, the second buffer 212 may be a result buffer that stores the result status RD of the first set of DMA commands with the corresponding command ID and the group ID.

### Third buffer 214:

The third buffer 214 may be coupled to the first controller 216. The third buffer 214 may include suitable circuitry that may be configured to perform one or more operations. For example, the third buffer 214 may be configured to receive the command status ED of each of the first set of DMA commands from the receiver 202. The third buffer 214 may receive the command status ED after the receiver 202 may provide the first set of DMA commands and the context information to the first buffer 210. The received command status ED may be queued. Additionally, the third buffer 214 may be configured to receive the updated command status ED of each of the first set of DMA commands from the first controller 216 and store the updated command status ED of each of the first set of DMA commands. For example, when the first set of DMA commands may be executing, the updated command status ED may correspond to executing. Alternatively, when the first set of DMA commands are executed, the updated command status ED may correspond to executed.

The third buffer 214 may be further configured to store the updated command status ED. The command status ED stored may be associated with the command ID of the corresponding DMA command of the first set of DMA commands. In an example, when a DMA command having a command ID DM01 may be queued, the third buffer 214 may store the command status ED as DM01- Queued. In an embodiment, the third buffer 214 may be a status buffer that stores the command status ED of the first set of DMA commands with the corresponding command ID and the group ID.

The command status ED stored may be further associated with the group ID of the corresponding subset of DMA commands of the first set of DMA commands. In an example, the third buffer 214 may store the command status ED as A01- Queued when two or more DMA commands having a group ID A01 are queued. Further, the third buffer 214 may be configured to receive the command status ED from the first controller 216 that may be further updated (*e.g.,* updated to one of executing or executed).

Each of the FIFO memory 204, the first buffer 210, the second buffer 212, and the third buffer 214 may be further coupled to the core 104 by means of the fifth interface 124. The fifth interface 124 may provide an access to the core 104 to debug each of the FIFO memory 204, the first buffer 210, the second buffer 212, and the third buffer 214. The core 104 may use each of the command status ED and the result status RD associated with the DMA commands to debug the DMA controller 112 during development of various applications.

### Second controller 218:

The second controller 218 may be coupled to the command arbiter 110. The second controller 218 may include suitable circuitry that may be configured to perform one or more operations. For example, the second controller 218 may be configured to receive the synchronization command S2 from the command arbiter 110 by means of the third interface 120c.

Upon receiving the synchronization command S2 associated with a command ID of a corresponding DMA command, the second controller 218 may be further configured to retrieve the command status ED from the third buffer 214. Further, the second controller 218 may be configured to determine whether the DMA command may have been executed. The second controller 218 may be further configured to hold the synchronization command S2 when the command status ED of one or more DMA commands of the first set of DMA commands may be queued or executing. Alternatively, upon determining that the DMA command may have been executed, the second controller 218 may be further configured to provide the corresponding command status ED to the command arbiter 110 by means of the third interface 120c. Upon receiving the command status ED, the command arbiter 110 may provide the command status ED to the set of command sequencers 108a-108d. Further, based on the command status ED, the command sequencers 108a-108d may synchronize the launch of the upcoming command (*e.g.* the second set of DMA commands).

### Third controller 220:

The third controller 220 may be coupled to the command arbiter 110. The third controller 220 may include suitable circuitry that may be configured to perform one or more operations. For example, the third controller 220 may be configured to receive the status command S1 from the command arbiter 110 by means of the second interface 120b. Based on the status command S1, the third controller 220 may be further configured to retrieve at least one of the command status ED and the result status RD of one or more DMA commands of the first set of DMA commands from the third buffer 214 and the second buffer 212, respectively. For example, when the status command S1 may be indicative of the command status ED of the high priority DMA command HD, the third controller 220 may retrieve the command status ED associated with the high priority DMA command HD. Further, the third controller 220 may be configured to provide at least one of the command status ED and the result status RD to the command arbiter 110 by way of the second interface 120b in response to the status command S1 thereby indicating that the corresponding DMA command may be executed.

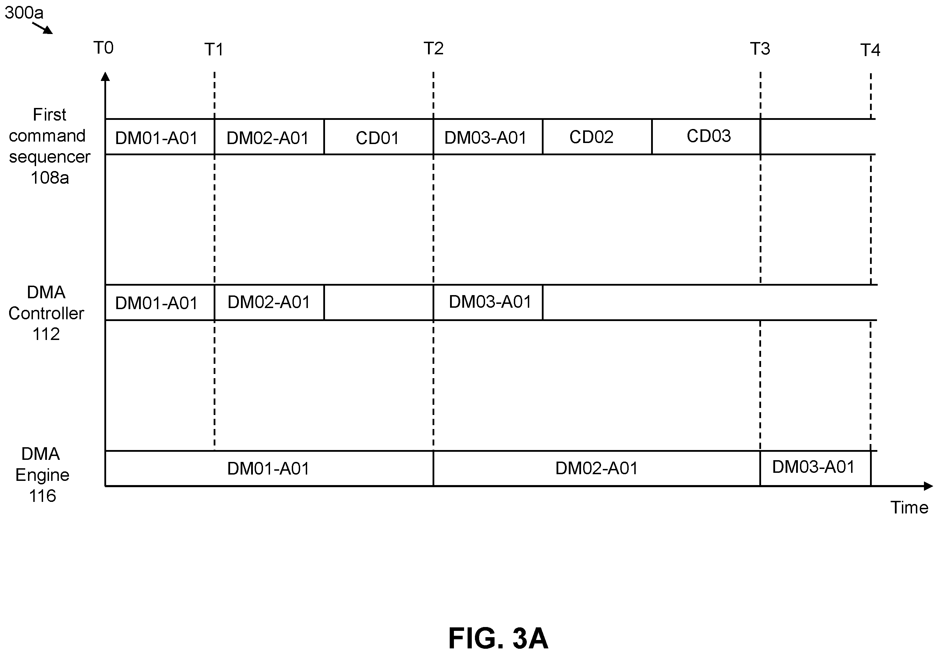

FIGS. 3A-3C represent first through third timing diagrams 300a-300c that illustrate launch of various commands by one or more command sequencers of the set of command sequencers 108a-108d, in accordance with an embodiment of the present disclosure. The first through third DMA commands may be represented as DM01-A01, DM02-A01, and DM03-A01, respectively such that a command ID associated with the first through third DMA commands may correspond to DM01, DM02, and DM03, respectively. Additionally, the group ID associated with the first through third DMA commands may correspond to A01. Further, the first through third control commands may be represented as CD01, CD02, and CD03, respectively.

Referring now to FIG. 3A, the first timing diagram 300a illustrates offloading of the first through third DMA commands from the first command sequencer 108a to the DMA controller 112.

The first command sequencer 108a may launch the first set of DMA commands (*e.g.,* a first DMA command DM01-A01, a second DMA command DM02-A01, and a third DMA command DM03-A01) and the plurality of control commands (*e.g.,* a first control command CD01, a second control command CD02, and a third control command CD03).

The first command sequencer 108a may launch the first DMA command DM01-A01 and the second DMA command DM02-A01 at time instance T0 and T1, respectively. After the launch of the second DMA command DM02-A01, the first control command CD01 may be launched. Further, the first command sequencer 108a may launch the third DMA command DM03-A01 at time instance T2. After the launch of the third DMA command DM03-A01, the second control command CD02 and the third control command CD03 may be launched. Upon the launch the first through third DMA commands DM01-A01, DM02-A01, and DM03-A01 by the first command sequencer 108a, the DMA controller 112 may store the first through third DMA commands DM01-A01, DM02-A01, and DM03-A01. Thus, the first through third DMA commands DM01-A01, DM02-A01, and DM03-A01 may be offloaded from the first command sequencer 108a such that corresponding control commands may be launched by the first command sequencer 108a and stalling of the first command sequencer 108a may be avoided.

The DMA controller 112 may provide the first DMA command DM01-A01 to the DMA engine 116 at the time instance T0. The DMA engine 116 may execute the first DMA command DM01-A01 during a time period T0-T2. At time instance T2, the DMA controller 112 may provide the second DMA command DM02-A01 to the DMA engine 116. The DMA engine 116 may execute the second DMA command DM02-A01 during a time period T2-T3. Additionally, at time instance T3, the DMA controller 112 may provide the third DMA command DM03-A01 to the DMA engine 116. The DMA engine 116 may execute the third DMA command DM03-A01 during a time period T3-T4.

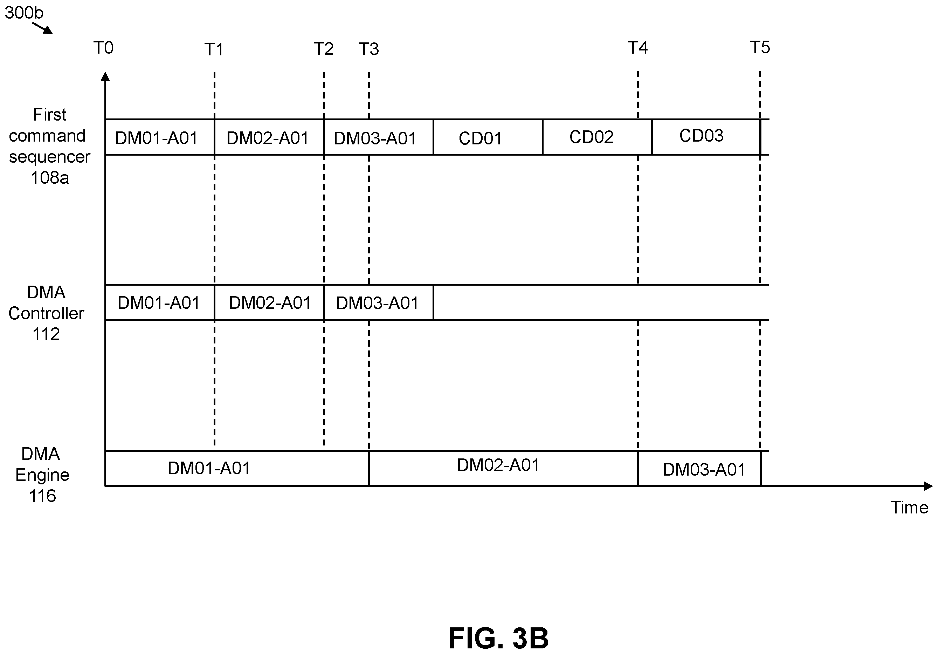

Referring now to FIG. 3B, the second timing diagram 300b illustrates a scenario where the first command sequencer 108a may receive the second set of instructions from the memory controller 102 such that the first command sequencer 108a may generate and launch the DMA commands prior to the control commands.

The first command sequencer 108a may launch the first through third DMA commands DM01-A01, DM02-A01, and DM03-A01 at the time instance T0, T1, and T2, respectively. Upon launching the first through third DMA commands DM01-A01, DM02-A01, and DM03-A01, the first command sequencer 108a may launch the first through third control commands CD01, CD02, and CD03.

The DMA controller 112 may store the first through third DMA commands DM01-A01, DM02-A01, and DM03-A01. Further, the DMA controller 112 may provide the first DMA command DM01-A01 to the DMA engine 116 at the time instance T0. The DMA engine 116 may execute the first DMA command DM01-A01 during the time period T0-T3. The DMA controller 112 may provide the second DMA command DM02-A01 to the DMA engine 116 at time instance T3. The DMA engine 116 may execute the second DMA command DM02-A01 during the time period T3-T4. Additionally, the DMA controller 112 may provide the third DMA command DM03-A01 to the DMA engine 116 at time instance T4. The DMA engine 116 may execute the third DMA command DM03-A01 during a time period T4-T5. Thus, by launching the first through third DMA commands DM01-A01, DM02-A01, and DM03-A01 before the launch of the first through third control commands CD01, CD02, and CD03, the first command sequencer 108a may ensure efficient bandwidth utilization of the DMA engine 116.

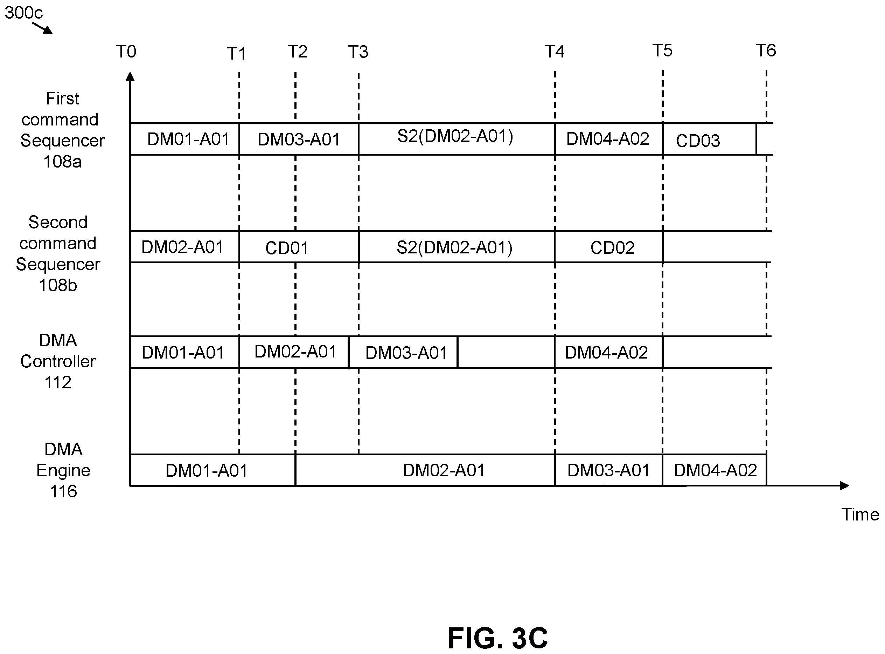

Referring now to FIG. 3C, the third timing diagram 300c illustrates synchronizing launch of a control command (e.g., the second control command CD02) of the plurality of control commands and a DMA command (e.g., a fourth DMA command DM04-A02) of the second set of DMA commands based on execution of a DMA command (*e.g.,* the second DMA command DM02-A01) of the first set of DMA commands.

The first command sequencer 108a may launch the first DMA command DM01-A01 and the third DMA command DM03-A01 at time instance T0 and the time instance T1, respectively. Further, the second command sequencer 108b may launch the second DMA command DM02-A01 at time instance T0. After the launch of the second DMA command DM02-A01, the first control command CD01 may be launched by the second command sequencer 108b. The DMA controller 112 may store the first through third DMA commands DM01-A01, DM02-A01, and DM03-A01.

The DMA controller 112 may provide the first DMA command DM01-A01 to the DMA engine 116 at the time instance T0. The DMA engine 116 may execute the first DMA command DM01-A01 during a time period T0-T2. Further, the DMA controller 112 may provide the second DMA command DM02-A01 to the DMA engine 116 at the time instance T2. The DMA engine 116 may execute the second DMA command DM02-A01 during a time period T2-T4. Additionally, the DMA controller 112 may provide the third DMA command DM03-A01 to the DMA engine 116 at the time instance T4. The DMA engine 116 may execute the third DMA command DM03-A01 during a time period T4-T5.

After the launch of the third DMA command DM03-A01, the first command sequencer 108a may launch the synchronization command S2 at time instance T3. The synchronization command S2 may be represented as S2(DM02-A01) such that the launch of the fourth DMA command DM04-A02 may be synchronized based on the execution of the second DMA command DM02-A01. Thus, the fourth DMA command DM04-A02 may be launched at time instance T4.

The fourth DMA command DM04-A02 may correspond to DM04 and the group ID associated with the fourth DMA command DM04-A02 may correspond to A02. In an embodiment, the fourth DMA command DM04-A02 may correspond to one of the second set of DMA commands. Additionally, after the launch of the first control command CD01, the second command sequencer 108b may launch the synchronization command S2 at time instance T3. The synchronization command S2 may be represented as S2(DM02-A01) such that the launch of the second control command CD02 may be synchronized based on the execution of the second DMA command DM02-A01. Thus, the second control command CD02 may be launched at time instance T4.

At time instance T4, the DMA controller 112 may provide the command status ED indicating execution of the second DMA command DM02-A01 to the first command sequencer 108a and the second command sequencer 108b. Further, upon receiving the command status ED, the first command sequencer 108a and the second command sequencer 108b may launch the fourth DMA command DM04-A02 and the second control command CD02, respectively, at the time instance T4. Upon the launch of the fourth DMA command DM04-A02, the DMA controller 112 may store the fourth DMA command DM04-A02. Further, the DMA controller 112 may provide the fourth DMA command DM04-A02 to the DMA engine 116 at the time instance T5. The DMA engine 116 may execute the fourth DMA command DM04-A02 during a time period T5-T6. Additionally, after the launch of the fourth DMA command DM04-A02, the third control command CD03 may be launched.

FIGS. 4A-4C, collectively, represent a flowchart 400 that illustrates a method for regulating DMA commands by the DMA controller 112, in accordance with an embodiment of the present disclosure. The method may be executed by the DMA controller 112.

Referring now to FIG. 4A, at step 402, the set of command sequencers 108a-108d may launch at least one of the first set of DMA commands (*e.g.,* the high priority DMA command HD and the low priority DMA command LD) and the critical priority DMA command CD. The first set of DMA commands may correspond to a single DMA command or a group of DMA commands. At step 406, the command arbiter 110 may determine whether the critical priority DMA command CD may be received by the command arbiter 110. If at step 406, it is determined that the critical priority DMA command CD may be received, step 408 is performed. At step 408, the command arbiter 110 may provide the critical priority DMA command CD to the DMA controller 112. Further, the DMA controller 112 may provide the critical priority DMA command CD to the DMA engine 116. At step 412, the DMA engine 116 may execute the critical priority DMA command CD received from the DMA controller 112. Upon successful execution, the DMA engine 116 may provide the result status RD of the critical priority DMA command CD to the DMA controller 112. At step 414, the DMA controller 112 may store the result status RD of the critical priority DMA command CD.

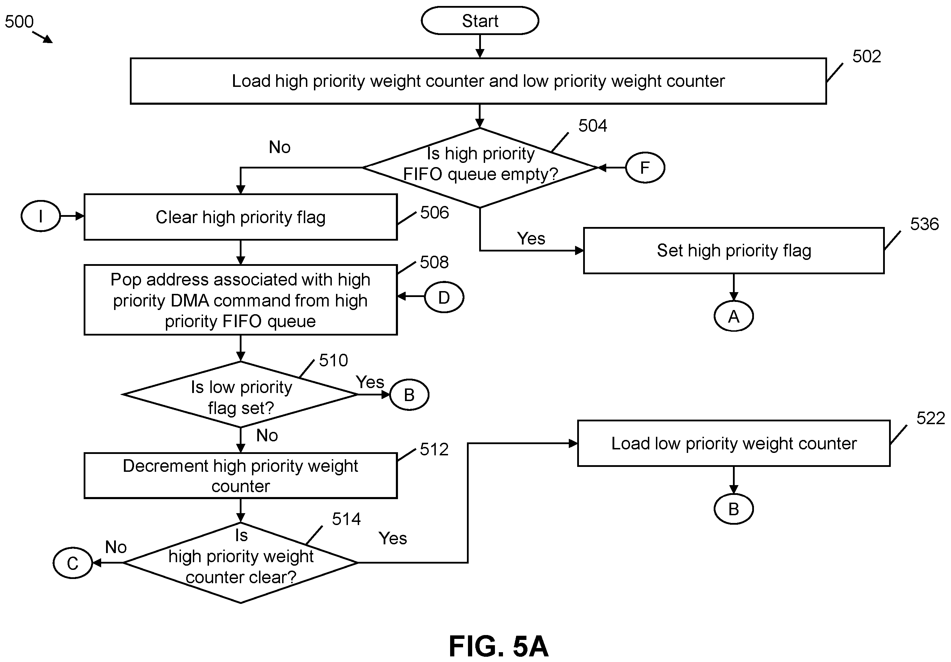

If at step 406, the command arbiter 110 may determine an absence of the critical priority DMA command CD, step 416 is performed. At step 416, the command arbiter 110 may provide the first set of DMA commands (e.g., the high priority DMA command HD and the low priority DMA command LD) to the DMA controller 112. At step 418, the DMA controller 112 may detect the priority value associated with each of the first set of DMA commands. Additionally, the DMA controller 112 may determine the context information associated with the first set of DMA commands. At step 420, the DMA controller 112 may queue the first set of DMA commands based on the detected priority value. The queuing of the first set of DMA commands is explained in detail in FIGS. 5A-5D.

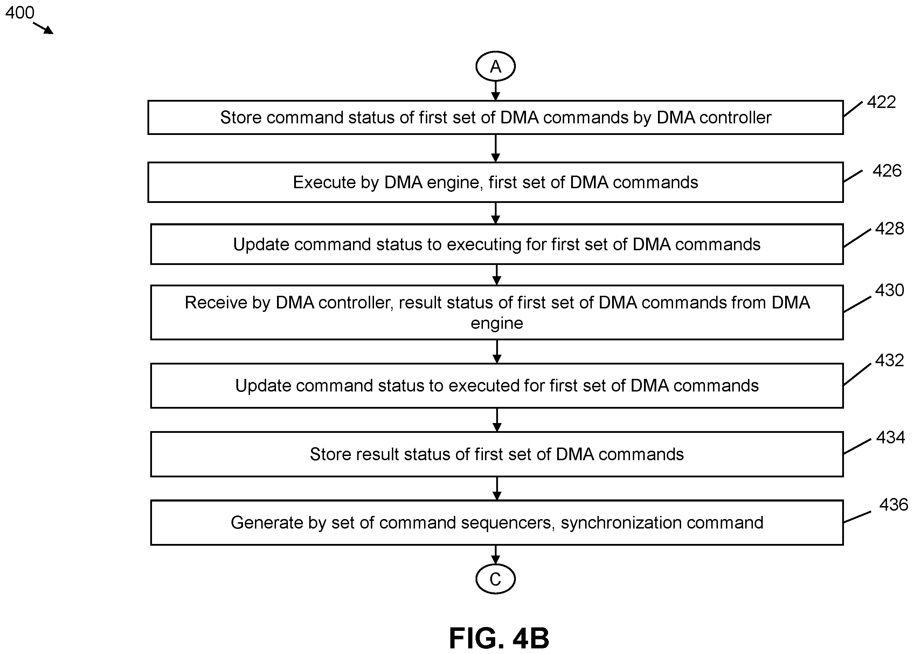

Referring now to FIG. 4B, at step 422, the DMA controller 112 may store the command status ED of the first set of DMA commands such that the command status ED may be queued. The DMA controller 112 may determine whether a new critical priority DMA command may be received. In a scenario, when a new critical priority DMA command may be received, the DMA controller 112 may provide the new critical priority DMA command to the DMA engine 116 with the highest priority. Further, the DMA controller 112 may provide the first set of DMA commands sequentially to the DMA engine 116. At step 426, the DMA engine 116 may execute the first set of DMA commands. During the execution of each of the first set of DMA commands, the DMA controller 112 may receive the interrupt signal IS from the DMA engine 116. Based on the interrupt signal IS, the DMA controller 112 may determine the command status ED of each of the first set of DMA commands.

At step 428, the DMA controller 112 may update the command status ED of the first set of DMA commands such that the updated command status ED may be executing. At step 430, the DMA controller 112 may receive the result status RD of the first set of DMA commands from the DMA engine 116. At step 432, the DMA controller 112 may further update the command status ED of the first set of DMA commands such that the updated command status ED may be executed. At step 434, the DMA controller 112 may store the result status RD of the first set of DMA commands. At step 436, the set of command sequencers 108a-108d may generate the synchronization command S2. The synchronization command S2 may include at least one of the command ID associated with one DMA command of the first set of DMA commands, and the group ID associated with the subset of DMA commands of the first set of DMA commands. The synchronization command S2 corresponding to one or more DMA commands of the first set of DMA commands (*e.g.,* the first DMA command) of the first set of DMA commands may be provided to the command arbiter 110 and further to the DMA controller 112.

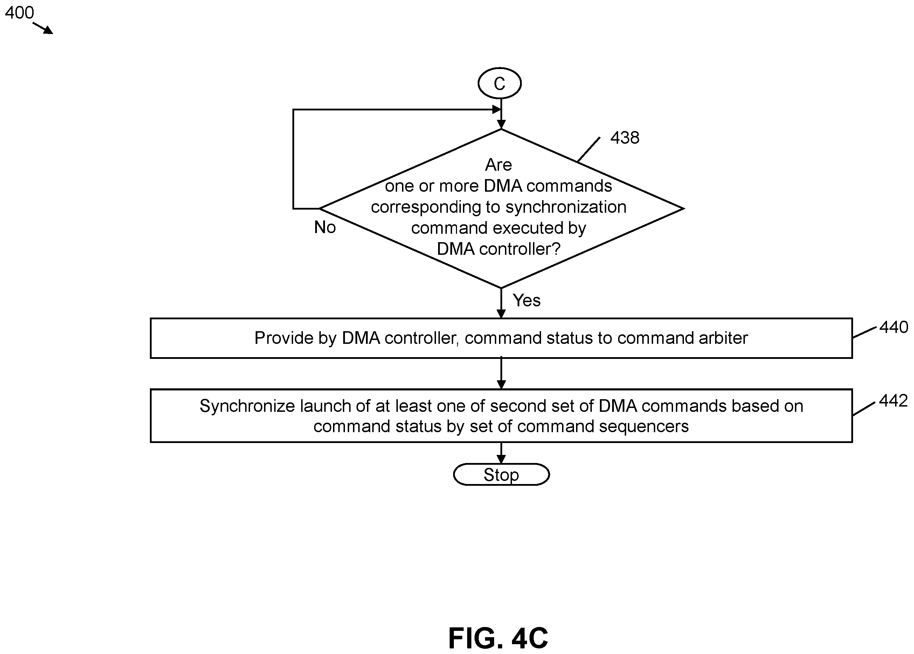

Referring now to FIG. 4C, at step 438, the DMA controller 112 may determine whether the one or more DMA commands corresponding to the synchronization command S2 may be executed by the DMA controller 112. If at step 438, the DMA controller 112 may determine that the one or more DMA commands corresponding to the synchronization command S2 may be yet to be executed, the DMA controller 112 may wait. If at step 438, the DMA controller 112 may determine that the one or more DMA commands corresponding to the synchronization command S2 may have been executed, step 440 is executed.

At step 440, the DMA controller 112 may provide the command status ED to the command arbiter 110. The command arbiter 110 may further provide the command status ED to the set of command sequencers 108a-108d. At step 442, the set of command sequencers 108a-108d may synchronize the launch of at least one of the second set of DMA commands based on the command status ED.

FIGS. 5A-5D, collectively, represent a flowchart 500 that illustrates the weighted round robin algorithm to select DMA commands of the first set of DMA commands by the FIFO arbiter 206, in accordance with an embodiment of the present disclosure.

Referring now to FIG. 5A, at step 502, the FIFO arbiter 206 may load the high priority weight counter and the low priority weight counter based on the weights received from the command register 107. In other words, the FIFO arbiter 206 may update the high priority weight counter and the low priority weight counter based on the weights. At step 504, the FIFO arbiter 206 may determine whether the high priority FIFO queue 222a may be empty. If at step 504, it is determined that the high priority FIFO queue 222a may not be empty, step 506 is performed.

At step 506, the FIFO arbiter 206 may clear the high priority flag. Further, the FIFO arbiter 206 may select the address associated with the high priority DMA command HD from the high priority FIFO queue 222a. At step 508, the FIFO memory 204 may pop the address associated with the high priority DMA command HD from the high priority FIFO queue 222a. The FIFO arbiter 206 may receive the high priority DMA command HD from the first buffer 210 based on the address popped by the FIFO memory 204. Further, the FIFO arbiter 206 may provide the high priority DMA command HD to the DMA arbiter 208. The DMA arbiter 208 may further provide the high priority DMA command HD to the DMA engine 116 for execution.

At step 510, the FIFO arbiter 206 may determine whether the low priority flag may be set. If at step 510, it is determined that the low priority flag is not set, step 512 is performed. At step 512, the FIFO arbiter 206 may decrement the high priority weight counter. The high priority weight counter may be decremented based on the execution of the high priority DMA command HD. At step 514, the FIFO arbiter 206 may determine whether the high priority weight counter may be clear. If at step 514, it is determined that the high priority weight counter is not clear, step 516 is performed.

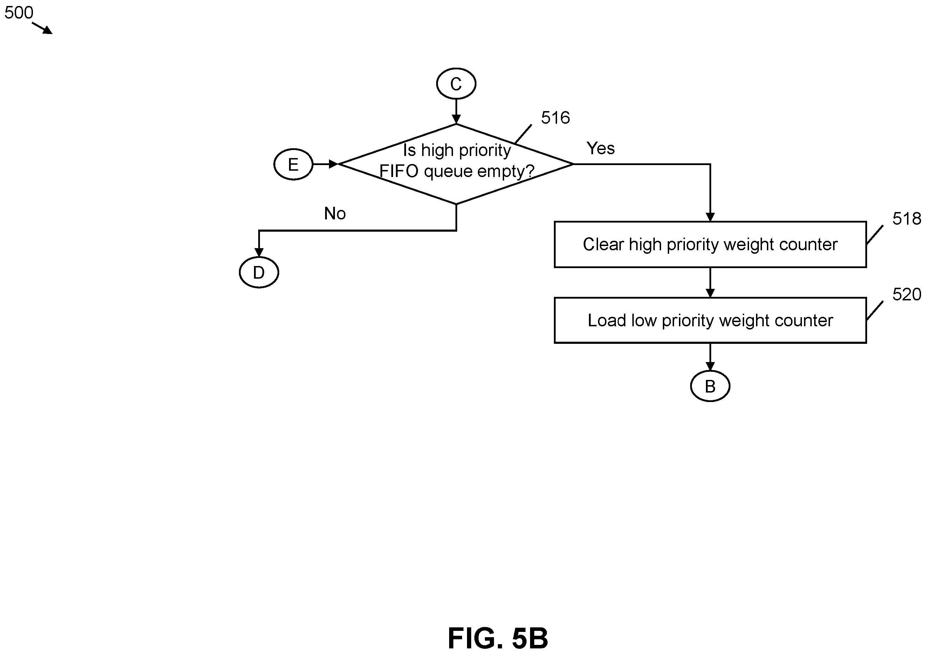

Referring now to FIG. 5B, at step 516, the FIFO arbiter 206 may determine whether the high priority FIFO queue 222a may be empty. If at step 516, it is determined that the high priority FIFO queue 222a is not empty, step 508 is performed.

If at step 516, it is determined that the high priority FIFO queue 222a may be empty, step 518 is performed. At step 518, the FIFO arbiter 206 may clear the high priority weight counter. The FIFO arbiter 206 may request the weights associated with the set of low priority DMA commands from the command register 107. Further, the FIFO arbiter 206 may receive the weights from the command register 107. At step 520, the FIFO arbiter 206 may load the low priority weight counter based on the weights received from the command register 107.

Referring back to FIG. 5A, if at step 514, it is determined that the high priority weight counter may be clear, step 522 is performed. The FIFO arbiter 206 may request the weights associated with the set of low priority DMA commands from the command register 107. Further, the FIFO arbiter 206 may receive the weights from the command register 107. At step 522, the FIFO arbiter 206 may load the low priority weight counter based on the weights received from the command register 107. After step 520 and step 522, step 524 is performed. If at step 510, it is determined that the low priority flag may be set, step 524 is performed. Additionally, after step 520, step 524 is performed.

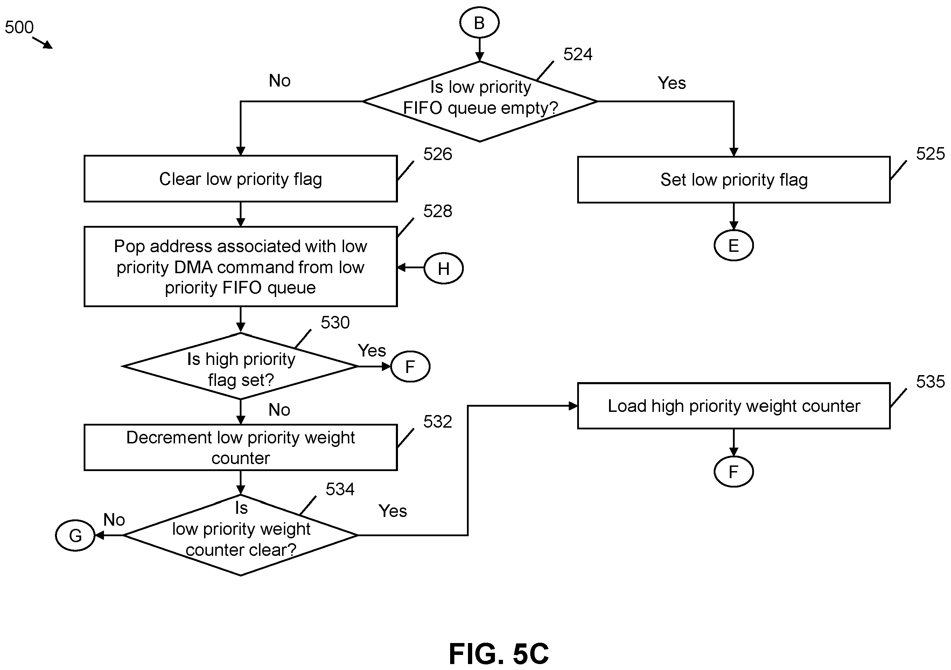

Referring now to FIG. 5C, at step 524, the FIFO arbiter 206 may determine whether the low priority FIFO queue 222b may be empty. If at step 524, it is determined that the low priority FIFO queue 222b may be empty, step 525 is performed. At step 525, the FIFO arbiter 206 may set the low priority flag. If at step 524, it is determined that the low priority FIFO queue 222b may not be empty, step 526 is performed. At step 526, the FIFO arbiter 206 may clear the low priority flag. Further, the FIFO arbiter 206 may select the address associated with the low priority DMA command LD from the low priority FIFO queue 222b. At step 528, the FIFO memory 204 may pop the address associated with the low priority DMA command LD from the low priority FIFO queue 222b.

At step 530, the FIFO arbiter 206 may determine whether the high priority flag may be set. If at step 530, it is determined that the high priority flag may be set, step 504 is performed. If at step 530 it is determined that the high priority flag may not be set, step 532 is performed. At step 532, the FIFO arbiter 206 may decrement the low priority weight counter. The low priority weight counter may be decremented based on the execution of the low priority DMA command LD.

At step 534, the FIFO arbiter 206 may determine whether the low priority weight counter may be clear. If at step 534, it is determined that the low priority weight counter may be clear, step 535 is performed. The FIFO arbiter 206 may request the weights associated with the set of high priority DMA commands from the command register 107. Further, the FIFO arbiter 206 may receive the weights from the command register 107. At step 535, the FIFO arbiter 206 may load the high priority weight counter. After step 535, step 504 is performed. If at step 534, it is determined that the low priority weight counter may be clear, step 538 is performed.

Referring back to FIG. 5A, if at step 504, it is determined that the high priority FIFO queue 222a may be empty, step 536 is performed. At step 536, the FIFO arbiter 206 may set the high priority flag. After step 536, step 538 is performed.

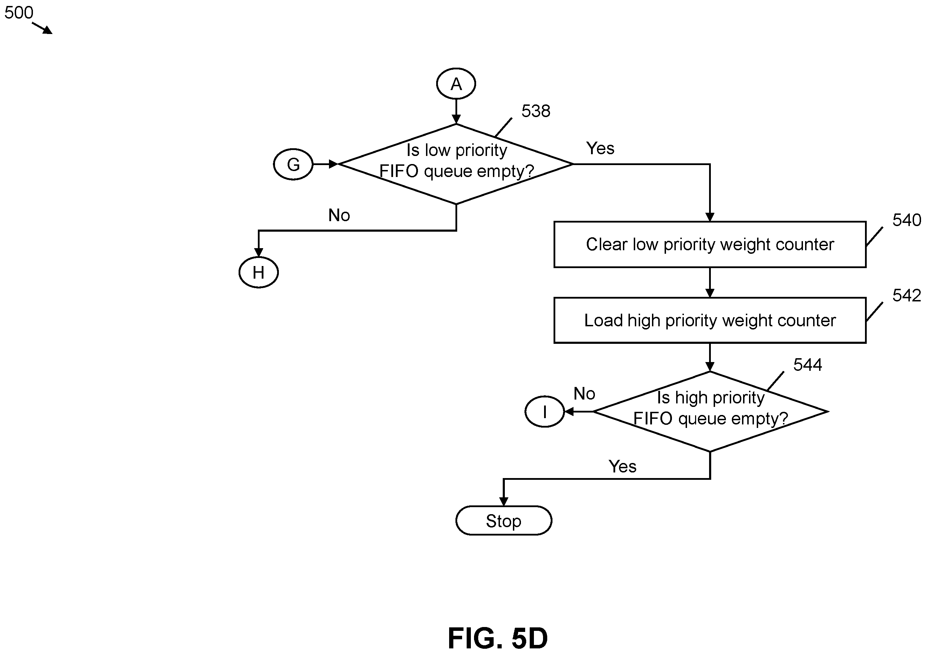

Referring now to FIG. 5D, at step 538, the FIFO arbiter 206 may determine whether the low priority FIFO queue 222b may be empty. If at step 538, it is determined that the low priority FIFO queue 222b may not be empty, step 528 is performed. If at step 538, it is determined that the low priority FIFO queue 222b may be empty, step 540 is performed. At step 540, the FIFO arbiter 206 may clear the low priority weight counter. The FIFO arbiter 206 may request the weights associated with the set of high priority DMA commands from the command register 107. Further, the FIFO arbiter 206 may receive the weights from the command register 107. At step 542, the FIFO arbiter 206 may load the high priority weight counter based on the weights received from the command register 107. At step 544, the FIFO arbiter 206 may determine whether the high priority FIFO queue 222a may be empty. If at step 544, it is determined that the high priority FIFO queue 222a may not be empty, step 506 is performed. If at step 544, it is determined that the high priority FIFO queue 222a may be empty, the process comes to a halt.

The DMA controller 112 of the present disclosure may perform arbitration of the first set of DMA commands based on the weighted round robin algorithm. The weighted round robin algorithm may consider priority assigned to each of the DMA commands such that the first set of DMA commands with high priority may be executed prior to the DMA commands with low priority. The DMA controller 112 may further arbitrate the critical priority DMA command CD such that the critical priority DMA command CD may be executed prior to the first set of DMA commands with high priority and low priority. Additionally, the DMA controller 112 may store the command status ED and the result status RD for each of the first set of DMA commands. The set of command sequencers 108a-108d may utilize the command status ED using at least one of the command ID and the group ID to determine whether the command ID associated with one of the first set of DMA commands may be free to be assigned to a new DMA command. A command sequencer of the set of command sequencers 108a-108d may utilize the command status ED of one of the first set of DMA commands launched by another command sequencer of the set of command sequencers 108a-108d to synchronize the execution of one of the second set of DMA commands and the plurality of control commands. Additionally, the set of command sequencers 108a-108d may utilize the result status RD using at least one of the command ID and the group ID to determine the outcome of the execution of at least one of first set of DMA commands.

As the first set of DMA commands may be offloaded from the set of command sequencers 108a-108d to the DMA controller 112, the stalling of the set of command sequencers 108a-108d may be avoided and a waiting time for the set of command sequencers 108a-108d before launching a new command may be eliminated. Thus, a processing throughput of the set of command sequencers 108a-108d may be improved over conventional techniques. Additionally, the DMA controller 112 may queue the first set of DMA commands such that when the frequency associated with upcoming DMA commands is low, the DMA engine 116 may execute the first set of DMA commands that may be queued. Hence, a bandwidth of the DMA engine 116 may be utilized efficiently. The DMA controller 112 and the set of command sequencers 108a-108d may be within the detection and ranging system (*e.g.,* a RADAR) of autonomous vehicles such that stalling of the set of command sequencers 108a-108d may be avoided by offloading the DMA commands. Further, the present disclosure may enable the coupling of the processing circuit 106 to a core by way of a hardware interface that may allow access to internal data structures of the DMA controller 112 to debug the processing circuit 106.

In an embodiment, a processing circuit may comprise a set of command sequencers configured to launch a first set of direct memory access (DMA) commands, wherein each DMA command of the first set of DMA commands may be associated with a command identifier (ID). The processing circuit may further comprise a DMA controller that may be coupled to the set of command sequencers, wherein the DMA controller may be configured to receive the first set of DMA commands from the set of command sequencers. The DMA controller may be further configured to queue the first set of DMA commands. Further, the DMA controller may be configured to store a command status for each DMA command of the first set of DMA commands, wherein the command status may be associated with the command ID of each of the first set of DMA commands, and wherein the set of command sequencers may be further configured to synchronize launch of at least one of a second set of DMA commands based on the command status.

In some embodiments, the processing circuit may further comprise a DMA engine that may be coupled to the DMA controller, wherein the DMA engine may be configured to execute the first set of DMA commands sequentially based on the queuing.

In some embodiments, the DMA controller may comprise a receiver that may be configured to receive the first set of DMA commands from the set of command sequencers, wherein the receiver may be further configured to detect a priority value of each DMA command of the first set of DMA commands, and wherein the first set of DMA commands are executed based on the priority value. The DMA controller may further comprise a buffer that may be coupled to the receiver, wherein the buffer may be configured to store the first set of DMA commands.

In some embodiments, the DMA controller comprises a first in first out (FIFO) memory that may comprise a plurality of FIFO queues, wherein the FIFO memory may be configured to store, based on the priority value of each DMA command of the first set of DMA commands, an address associated with each of the first set of DMA commands in the plurality of FIFO queues.

In some embodiments, the first set of DMA commands may comprise a set of high priority DMA commands and a set of low priority DMA commands. The plurality of FIFO queues may comprise high priority FIFO queues and low priority FIFO queues. The high priority FIFO queues may be configured to store the address associated with the set of high priority DMA commands, and the low priority FIFO queues may be configured to store the address associated with the set of low priority DMA commands.

In some embodiments, the DMA controller may comprise a FIFO arbiter that may be coupled to the FIFO memory, wherein the FIFO arbiter may be configured to select the address associated with each of the first set of DMA commands. The FIFO arbiter may be further configured to retrieve each of the first set of DMA commands from the buffer based on the address associated with each of the first set of DMA commands.

In some embodiments, the selection of the address associated with each of the first set of DMA commands may be based on a weighted round robin algorithm.

In some embodiments, the selection of the address associated with each of the first set of DMA commands and the retrieval of each of the first set of DMA commands may be sequential.

In some embodiments, based on the retrieval of each of the first set of DMA commands, the FIFO memory may be further configured to pop the address associated with each of the first set of DMA commands.

In some embodiments, the processing circuit may further comprise a command arbiter that may be coupled to the set of command sequencers. The set of command sequencers may be further configured to launch a critical priority DMA command and provide the critical priority DMA command and the first set of DMA commands to the command arbiter. Further, the DMA controller may be coupled to the set of command sequencers by way of the command arbiter. The DMA controller may comprise a DMA arbiter that may be configured to receive the first set of DMA commands and the critical priority DMA command, wherein a priority value associated with the critical priority DMA command may be greater than a priority value of each of the first set of DMA commands, and wherein the critical priority DMA command may be executed prior to execution of the first set of DMA commands. The DMA arbiter may be further configured to queue the first set of DMA commands, wherein based on the queuing, the first set of DMA commands may be sequentially executed.

**In** some embodiments, the DMA controller may comprise a buffer that may be configured to store the command status for the first set of DMA commands based on the command ID of each of the first set of DMA commands.

**In** some embodiments, the command ID may be uniquely assigned to each of the first set of DMA commands.

**In** some embodiments, wherein the command status of a DMA command of the first set of DMA commands may indicate one of that (i) the DMA command may be queued for execution, (ii) the DMA command may being executed, (iii) the DMA command may have been executed, and (iv) the command ID of the DMA command may be free.

**In** some embodiments, the set of command sequencers may be further configured to generate a synchronization command that may comprise the command ID associated with a first DMA command of the first set of DMA commands, to synchronize execution of a second DMA command of the second set of DMA commands, wherein based on the synchronization command, the DMA controller may be further configured to provide the command status indicating that the first DMA command may be executed, to the set of command sequencers.

**In** some embodiments, each of the first set of DMA commands may further comprise a group ID, wherein the group ID may be uniquely assigned to each subset of DMA commands of the first set of DMA commands, and wherein each subset of DMA commands may be associated with a corresponding predefined operation.

**In** some embodiments, the set of command sequencers may be further configured to generate a synchronization command that may comprise the group ID associated with the subset of DMA commands, to synchronize execution of a DMA command of the second set of DMA commands, wherein based on the synchronization command, the DMA controller may be further configured to provide the command status indicating that the subset of DMA commands may be executed, to the set of command sequencers.

**In** some embodiments, the DMA controller may be further configured to store a result status for each DMA command of the first set of DMA commands, wherein the result status may be associated with the command ID of each of the first set of DMA commands, and wherein the result status indicates an outcome of execution of a corresponding DMA command of the first set of DMA commands.

**In** some embodiments, the set of command sequencers may be further configured to generate a status command that may comprise the command ID associated with a DMA command of the first set of DMA commands to determine at least one of the command status and a result status of at least one of the first set of DMA commands, wherein based on the status command, the DMA controller may be further configured to provide at least one of the command status and the result status of the at least one of the first set of DMA commands to the set of command sequencers.

**In** another embodiment, a method may comprise launching, by a set of command sequencers, a first set of direct memory access (DMA) commands, wherein each DMA command of the first set of DMA commands may be associated with a command identifier (ID). The method may further comprise receiving by a DMA controller, the first set of DMA commands from the set of command sequencers, wherein the set of command sequencers and the DMA controller may be included in a processing circuit. The method may further comprise queuing, by the DMA controller, the first set of DMA commands. The method may further comprise storing, by the DMA controller, a command status for each DMA command of the first set of DMA commands, wherein the command status may be associated with the command ID of each of the first set of DMA commands. Further, the method may comprise synchronizing, by the set of command sequencers, launch of a second set of DMA commands based on the command status.

**In** some embodiments, the method may further comprise generating, by the set of command sequencers, a synchronization command that may comprise at least one of (i) the command ID associated with a DMA command of the first set of DMA commands, and (ii) a group ID associated with a subset of DMA commands of the first set of DMA commands, to synchronize execution of a DMA command of the second set of DMA commands, wherein each DMA command of the subset of DMA commands may be associated with a corresponding predefined operation.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements. The term "coupled" may refer to at least one of direct or indirect coupling that may not necessarily be by way of mechanical or any physical means. Further, a system or method that "comprises", "has", or "includes" one or more elements possesses those one or more elements but is not limited to possessing only those one or more elements.

## Claims

1. A processing circuit, comprising:
a set of command sequencers configured to launch a first set of direct memory access (DMA) commands, wherein each DMA command of the first set of DMA commands is associated with a command identifier (ID); and
a DMA controller coupled to the set of command sequencers, wherein the DMA controller is configured to:
receive the first set of DMA commands;
queue each DMA command of the first set of DMA commands; and
store a command status for each DMA command of the first set of DMA commands, wherein the command status is associated with the command ID of each of the first set of DMA commands, and wherein the set of command sequencers is further configured to synchronize launch of at least one of a second set of DMA commands based on the command status.

2. The processing circuit of claim 1, further comprising a DMA engine coupled to the DMA controller, wherein the DMA engine is configured to execute the first set of DMA commands sequentially based on the queuing.

3. The processing circuit of claim 1 or claim 2, wherein the DMA controller comprises:
a receiver configured to receive the first set of DMA commands from the set of command sequencers, wherein the receiver is further configured to detect a priority value of each DMA command of the first set of DMA commands, and wherein the first set of DMA commands is executed based on the priority value; and
a buffer coupled to the receiver, wherein the buffer is configured to store the first set of DMA commands.

4. The processing circuit according to any preceding claim, wherein the DMA controller comprises a first in first out (FIFO) memory that comprises a plurality of FIFO queues, wherein the FIFO memory is configured to store, based on the priority value of each DMA command of the first set of DMA commands, an address associated with each of the first set of DMA commands in the plurality of FIFO queues.

5. The processing circuit of claim 4, wherein
the first set of DMA commands comprise a set of high priority DMA commands and a set of low priority DMA commands,
the plurality of FIFO queues comprise high priority FIFO queues and low priority FIFO queues, and
the high priority FIFO queues are configured to store the address associated with each of the set of high priority DMA commands, and the low priority FIFO queues are configured to store the address associated with each of the set of low priority DMA commands.

6. The processing circuit of claim 4, wherein the DMA controller comprises a FIFO arbiter coupled to the FIFO memory, and wherein the FIFO arbiter is configured to:
select the address associated with each of the first set of DMA commands; and
retrieve each of the first set of DMA commands from the buffer based on the address associated with each of the first set of DMA commands.

7. The processing circuit of claim 6, wherein the selection of the address associated with each of the first set of DMA commands is based on a weighted round robin algorithm.

8. The processing circuit of claim 6, wherein the selection of the address associated with each of the first set of DMA commands and the retrieval of each of the first set of DMA commands is sequential.

9. The processing circuit of claim 6, wherein based on the retrieval of each of the first set of DMA commands, the FIFO memory is further configured to pop the address associated with each of the first set of DMA commands.

10. The processing circuit according to any preceding claim, further comprising a command arbiter coupled to the set of command sequencers, wherein the set of command sequencers is further configured to:
launch a critical priority DMA command; and
provide the critical priority DMA command and the first set of DMA commands to the command arbiter, wherein the DMA controller is coupled to the set of command sequencers by way of the command arbiter, and wherein the DMA controller comprises a DMA arbiter that is configured to:
receive the first set of DMA commands and the critical priority DMA command, wherein a priority value associated with the critical priority DMA command is greater than a priority value of each of the first set of DMA commands, and wherein the critical priority DMA command is executed prior to execution of the first set of DMA commands; and
queue the first set of DMA commands, wherein based on the queuing, the first set of DMA commands is sequentially executed.

11. The processing circuit according to any preceding claim , wherein the DMA controller is further configured to store a result status for each DMA command of the first set of DMA commands, wherein the result status is associated with the command ID of each of the first set of DMA commands, and wherein the result status indicates an outcome of execution of a corresponding DMA command of the first set of DMA commands.

12. The processing circuit according to any preceding claim,
wherein the set of command sequencers is further configured to generate a status command that comprises the command ID associated with a DMA command of the first set of DMA commands to determine at least one of the command status and a result status of at least one of the first set of DMA commands, and
wherein based on the status command, the DMA controller is further configured to provide at least one of the command status and the result status of the at least one of the first set of DMA commands to the set of command sequencers.

13. A method comprising:
launching, by a set of command sequencers, a first set of direct memory access (DMA) commands, wherein each DMA command of the first set of DMA commands is associated with a command identifier (ID);
receive, by a DMA controller, the first set of DMA commands from the set of command sequencers, wherein the set of command sequencers and the DMA controller are included in a processing circuit;
queuing, by the DMA controller, the first set of DMA commands;
storing, by the DMA controller, a command status for each DMA command of the first set of DMA commands, wherein the command status is associated with the command ID of each of the first set of DMA commands; and
synchronizing, by the set of command sequencers, launch of a second set of DMA commands based on the command status.

14. The method of claim 13, further comprising generating, by the set of command sequencers, a synchronization command that comprises at least one of (i) the command ID associated with a DMA command of the first set of DMA commands, and (ii) a group ID associated with a subset of DMA commands of the first set of DMA commands, to synchronize execution of a DMA command of the second set of DMA commands, wherein each DMA command of the subset of DMA commands is associated with a corresponding predefined operation.
